# EUROPÄISCHE PATENTSCHRIFT

(11) **EP 0 937 621 B1**
(45) Veröffentlichungstag und Bekanntmachung des Hinweises auf die Patenterteilung: **25.01.2006**
(21) Anmeldenummer: 98118528.3
(22) Anmeldetag: 30.09.1998
(51) Int. Cl.: B60T 13/66, B60T 8/32, B60T 8/94, B60T 17/22

(54) **Verfahren und Vorrichtung zur Steuerung einer Bremsanlage**
Method and device for controlling a brake system
Procédé et dispositif de contrôle d' un système de freinage

(30) Priorität: 21.02.1998 DE 19807368
(43) Veröffentlichungstag der Anmeldung: 25.08.1999
(73) Patentinhaber: ROBERT BOSCH GMBH, 70442 Stuttgart (DE)
(72) Erfinder: Schmidt, Guenther, 97941 Tauberbischofsheim (DE); Binder, Juergen, 70599 Stuttgart (DE); Winner, Hermann, 76229 Karlsruhe (DE); Gottwick, Ulrich, 70192 Stuttgart (DE)

(56) Entgegenhaltungen:
- EP-A- 0 716 003
- WO-A-94/25322
- DE-A- 3 418 042
- US-A- 4 870 390
- US-A- 5 074 145
- US-A- 5 221 125
- US-A- 5 373 454
- US-A- 5 498 070
- JONNER W -D ET AL: "ELECTROHYDRAULIC BRAKE SYSTEM - THE FIRS APPROACH TO BRAKE-BY-WIRE TECHNOLOGY" CURRENT AND FUTURE DEVELOPMENTS IN ABS/TCS AND BRAKE TECHNOLOGY,XX,XX, 1. Februar 1996 (1996-02-01), Seiten 105-112, XP000199045

## Beschreibung

### Stand der Technik

Die Erfindung betrifft ein Verfahren und eine Vorrichtung zur Steuerung einer Bremsanlage gemäß den Oberbegriffen der unabhängigen Patentansprüche.

Ein derartiges Verfahren bzw. eine derartige Vorrichtung ist beispielsweise aus dem SAE-Paper 960991 bekannt. Dort wird eine elektrohydraulische Bremsanlage beschrieben, bei welcher aus der Bremspedalbetätigung durch den Fahrer ein Bremswunsch des Fahrers abgeleitet wird. Dieser wird gegebenenfalls unter Berücksichtigung von weiteren Betriebsgrößen in Sollbremsdrücke für die einzelnen Radbremsen umgerechnet. Die Sollbremsdrücke werden für jedes Rad durch Druckregelkreise auf der Basis des vorgegebenen Solldrucks sowie des im Bereich der Radbremse gemessenen Istbremsdrucks eingeregelt. Bei einer derartigen hydraulischen Bremsanlage ist ein Speicher vorgesehen, der durch eine elektrisch ansteuerbare Pumpe zur Druckversorgung der Bremsanlage aufgeladen wird. Da das Funktionieren dieser Druckversorgung für die Betriebsfähigkeit der elektrohydraulischen Bremsanlage wesentlich ist, muß die korrekte Funktion der Druckversorgung überwacht werden. Ferner müssen Maßnahmen vorgesehen sein, die dem Fahrer auch im Fehlerfall der Druckversorgung ein Abbremsen des mit der Bremsanlage ausgerüsteten Kraftfahrzeugs erlauben.

Aus der WO 94/25322 A1 ist ein Verfahren zur Überprüfung der Betriebsfähigkeit der hydraulischen Energieversorgungseinheit einer Bremsanlage bekannt. Dabei wird bei jedem Aufladevorgang des in der Bremsanlage vorhandenen Hochdruckspeichers die Aufladezeit gemessen und mit einem Aufladezeit-Sollwert verglichen. Wird eine Abweichung von einem vorgegebenen Differenzwert festgestellt, so wird eine Anzeige ausgelöst

Es ist Aufgabe der Erfindung, Maßnahmen anzugeben, mit deren Hilfe die Funktionsfähigkeit der Druckversorgung einer elektrohydraulischen Bremsanlage zuverlässig festgestellt werden kann. Ferner sollen Maßnahmen angegeben werden, die zu einem sicheren Betrieb der Bremsanlage auch im Fehlerfall der Druckversorgung des elektrohydraulischen Bremssystems gewährleisten.

Dies wird durch die kennzeichnenden Merkmale der unabhängigen Patentansprüche erreicht.

### Vorteile der Erfindung

Es wird eine zuverlässige Vorgehensweise zur Überprüfung der Funktionsfähigkeit der Druckversorgung einer elektrohydraulischen Bremsanlage bereitgestellt. Dabei erfolgt infolge der Auswertung von Gradienten die Fehlererkennung sehr schnell und genau. Es muß kein vollständiger Ladezyklus des Druckversorgungsspeichers abgewartet werden. Besonders vorteilhaft ist, daß verschiedene Fehlerquellen isoliert werden können.

In vorteilhafter Weise werden Sollwerte für die Druckänderung gebildet, bei denen der aktuelle Betriebszustand der Pumpe berücksichtigt ist. Dies trägt zur Genauigkeit, Schnelligkeit und Zuverlässigkeit der Fehlererkennung bei.

Ein weiterer Vorteil ist, daß die Überwachung der Funktionsfähigkeit der Druckversorgung auf Betriebszustände, in der Speicherdruck aufgebaut oder gehalten werden soll, beschränkt wird, so daß die sehr unsichere und schwierige Überprüfung der korrekten Speicherladung während eines Brem seneingriffes, während dem aus dem Speicher Volumen entnommen wird, nicht beachtet werden muß.

Die Überwachung des Speicherdrucks geschieht hierbei durch eine Abfrage auf einen bestimmten absoluten Minimaldruck. ????

Vorteilhaft ist ferner, daß bei auftretendem Fehler durch Umschalten auf ein rein hydraulisches Bremssystem die Bremsung des mit der elektrohydraulischen Bremsanlage ausgerüsteten Kraftfahrzeugs gewährleistet ist.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein bevorzugtes Ausführungsbeispiel einer elektrohydraulischen Bremsanlage, während in Figur 2 die die elektrohydraulische Bremsanlage steuernde Steuereinheit dargestellt ist. In Figur 3 ist ein Flußdiagramm dargestellt, welches eine bevorzugte Realisierung der Druckversorgungsüberwachung und der Notlaufmaßnahmen als Programm eines Mikrocomputers darstellt, die in Figur 4 anhand eines Diagramms verdeutlicht ist.

### Beschreibung von Ausführungsbeispielen

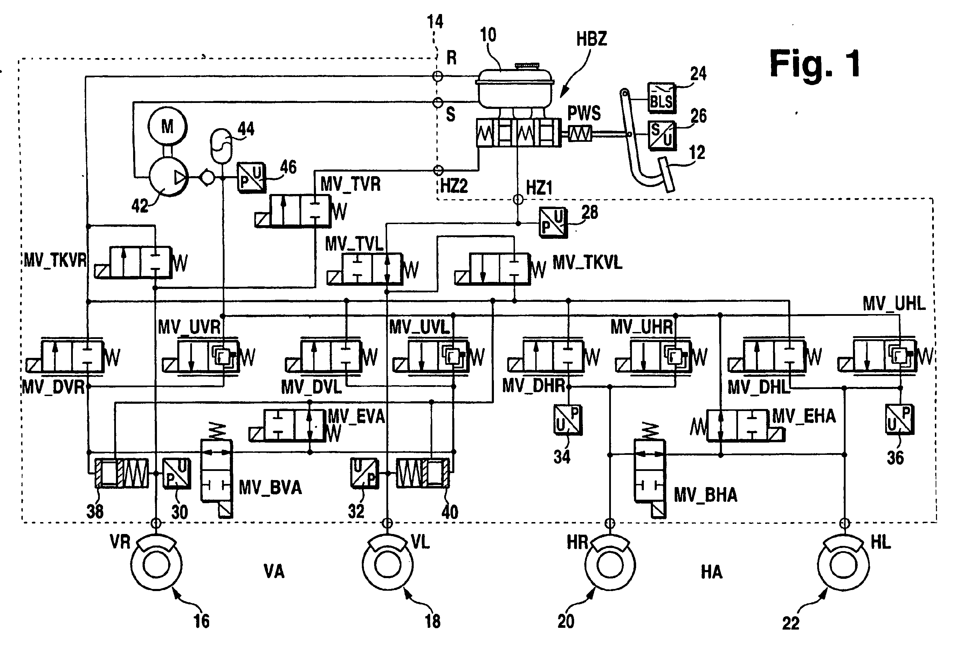

Figur 1 zeigt ein bevorzugtes Ausführungsbeispiel einer elektrohydraulischen Bremsanlage. Sie zeigt einen Hauptbremszylinder HBZ mit Vorratsbehälter 10; an den ein vom Fahrer betätigbares Bremspedal angebracht ist. Ferner ist ein Hydraulikaggregat 14 vorgesehen, welches Ventil- und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt, und eine Meßeinrichtung 26 zur Erfassung der Auslenkung des Bremspedals. Der Bremspedalschalter kann als einfacher Schließer ausgelegt sein, oder zur Verbesserung der Überwachbarkeit als doppelter Schalter mit einem Öffner und einem Schließer. Ebenso kann die Meßeinrichtung 26 zur Erfassung der Auslenkung des Pedals redundant ausgelegt werden. Ferner ist ein Pedalwegsimulator PWS vorgesehen, welcher für den Fahrer bei Betätigen des Bremspedals eine Gegenkraft simuliert. An den Hauptbremszylinder HBZ sind die zwei Bremskreise HZ1 und HZ2 angeschlossen. In diesen sind jeweils ein Trennventil MV_TVR und MV_TVL eingefügt, welches bei elektrisch gesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem sind für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennerkolben 38 und 40 zwischen den Ventilen (Ein- und Auslaßventil) und den Drucksensoren bzw. der Radbremse. Die Druckmodulatoren sind über Ausgleichsventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die in unbestromtem Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d.h. geschlossen. Ferner ist jeweils ein Temperaturkompensationsventil MV_TKVL und MV_TKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer, vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Einkolben-Hochdruckpumpe 42. Diese ist an einen Hochdruckspeicher 44 angeschlossen, der als zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die nachfolgend beschriebene erfindungsgemäße Vorgehensweise wird jedoch nicht nur in Verbindung mit einer solchen Hydraulikschaltung vorteilhaft angewendet, sondern überall dort, wo im Zusammenhang mit elektrisch gesteuerten Bremsanlage mit elektrisch steuerbarer Druckversorgung der Druck eine Überwachung der Druckversorgung erfolgt.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimulators gebildet. Bei Sensierung eines Bremswunsches über den Pedalwegsensor, den Bremspedalschalter und/oder den Drucksensor werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremslichtschalters 24, des Wegsensors 26 und/oder des Drucksensors 28 wird der Bremswunsch des Fahrers beispielsweise als Sollverzögerung oder als Sollbremskraft errechnet. Aus diesem Bremswunsch werden die einzelnen Sollradbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Solldrücken im linken und rechten Rad einer Achse werden die Ausgleichsventile geschlossen und in jeder Radbremse der vorgegebene Solldruck durch Ansteuern der Einlaß- und Auslaßventile im Sinne einer Regelung des Ist-Bremsdruckes auf den Sollbremsdruck eingeregelt. Zum Druckaufbau an einer Radbremse wird das Einlaßventil so weit bestromt, daß sich der gewünschte Solldruck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen.

Eine Betätigung der Pumpe 42 findet bei aktivem Bremsvorgang und/oder bei einem Absinken des Speicherdrucks im Speicher 44 unter einen vorbestimmten Wert statt. Neben dieser Funktion wird der erfaßte Speicherdruck 46 auch im Rahmen der Regelung ausgewertet, da er im wesentlichen den am Eingang der Einlaßventile liegenden Druck repräsentiert.

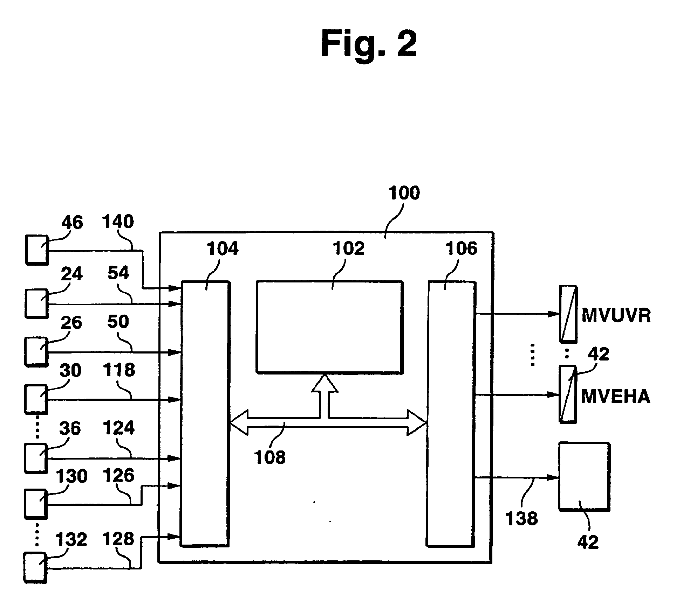

Die elektrisch betätigbaren Ventile sowie die Pumpe 42 werden von wenigstens einer elektronischen Steuereinheit angesteuert, die in Figur 2 skizziert ist. Sie umfaßt dabei wenigstens einen Mikrocomputer 102, eine Eingangsschaltung 104, eine Ausgangsschaltung 106 und ein diese Elemente verbindendes Bussystem 108 zum gegenseitigen Datenaustausch. Der Eingangsschaltung 104 sind die Leitungen 50 und 54 von Bremspedalschalter 24 und Pedalwegsensor 26 zugeführt. Ferner verbinden Eingangsleitungen 118 bis 124 die Eingangsschaltung 104 mit den jeder Radbremse zugeordneten Sensoren 30 bis 36. Ferner ist eine Eingangsleitung 140 vorgesehen, die von der Meßeinrichtung 46 zur Erfassung des Speicherdrucks der Eingangsleitung 104 zugeführt ist. Weitere Eingangsleitungen 126 bis 128 verbinden die Eingangsschaltung 104 mit Meßeinrichtungen 130 bis 132 zur Erfassung weiterer Betriebsgrößen der Bremsanlage, des Fahrzeugs und/oder dessen Antriebseinheit. Derartige Betriebsgrößen sind beispielsweise die Radgeschwindigkeiten, gegebenenfalls das von der Antriebseinheit abgegebene Motormoment, Achslasten, der Druck in der Bremsleitung (Sensor 28), etc. An die Ausgangsschaltung 106 sind mehrere Ausgangsleitungen angeschlossen. Beispielhaft sind die Ausgangsleitungen dargestellt, über welche die Ventile der Druckmodulatoren betätigt werden. Über eine weitere Ausgangsleitung 138 wird die Pumpe 42 angesteuert. Die Steuereinheit 100 steuert die Bremsanlage abhängig von den zugeführten Signalgrößen im oben dargestellten Sinne.

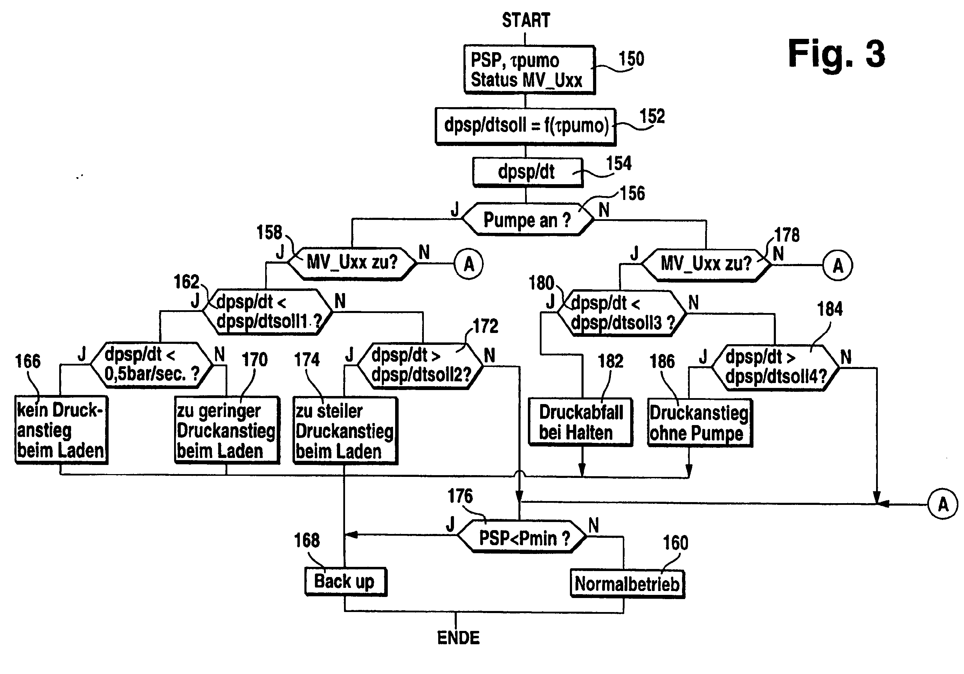

Figur 3 zeigt eine bevorzugte Ausführung anhand eines Flußdiagramms, welches die Realisierung der Überwachung der Druckversorgung bzw. die Einleitung eines Notbremsbetriebs im Fehlerfall als Programms des Mikrocomputers 102 beschreibt. Das Programm wird während des Betriebs des Kraftfahrzeugs in vorgegebenen Zeitintervallen durchlaufen.

Im ersten Schritt 150 wird der gemessene Speicherdruck PSP, das Tastverhältnis τPUMO des Pumpenmotors sowie der Status der Aufbauventile MV_Uxx eingelesen. Im bevorzugten Ausführungsbeispiel wird der Pumpenmotor zum Laden des Speichers mittels eines pulsweitenmodulierten, veränderlichen Taktsignals angesteuert. Das Ansteuersignal τPUMO repräsentiert das aktuelle Tastverhältnis, mit welchem der Pumpenmotor betätigt wird. Der Status der Aufbauventile wird anhand der Ventilströme festgestellt, wobei bei vorhandenem Ventilstrom das Ventil in Abhängigkeit von Stärke des Ventilstroms und des am Ventil anliegenden Druckgradient geöffnet oder geschlossen ist, bei nicht vorhandenem Ventilstrom das Ventil in seiner Ausgangsstellung, d.h. geschlossen, ist. Im nächsten Schritt 152 wird ein Sollwert für die Speicherdruckänderung über der Zeit dPSP/dt, insbesondere für den Speicherdruckgradienten, abhängig vom Tastverhältnis des Pumpenmotoransteuersignals und gegebenenfalls dem aktuellen Speicherdruck bestimmt. Im bevorzugten Ausführungsbeispiel wird über Kennlinie, Tabellen und/oder Berechnungsschritte abhängig von der Pumpenansteuersignalgröße ein oberer und ein unterer Grenzwert für die Druckänderung abgeleitet. In anderen Ausführungsbeispiel wird ein mittlerer Sollwert gebildet, bei dessen Auswertung Toleranzwerte mit einbezogen werden, so daß eine obere und eine untere Schwelle entsteht. Da die Pumpleistung temperaturabhängig ist, kann der Sollwert für den Speicherdruck noch genauer eingegrenzt werden, wenn zusätzlich ein Temperatursignal eingelesen wird.

Im darauffolgenden Schritt 154 wird die Speicherdruckänderung über der Zeit dPSP/dt auf der Basis des aktuell gemessenen Speicherdrucks und eines in einem vorherigen Programmdurchlauf ermittelten Druckwertes gebildet. Das gemessene Signal wird geeignet gefiltert, um Druckpulsationen während der Nachladung vernachlässigen zu können. Im darauffolgenden Abfrageschritt 156 wird überprüft, ob die Pumpe eingeschaltet ist. Dies erfolgt vorzugsweise auf der Basis des Ansteuersignals, wobei die Pumpe als eingeschaltet gilt, wenn ein Ansteuersignal ausgegeben wird. Ist die Pumpe eingeschaltet, wird im Schritt 158 überprüft, ob alle Aufbauventile MV_Uxx geschlossen sind. Ist dies nicht der Fall, befindet sich das System in einem Zustand der Volumenentnahme aus dem Speicher, während dem der Speicherdruck auf einen Minimaldruck im Speicher überwacht wird (pₛₚ > pₘᵢₙ z.B. 130 bar). Daher wird Normalbetrieb gemäß Schritt 160 angenommen und die elektronische Steuerung der Bremse durchgeführt. Unterschreitet der Speicherdruck den Minimaldruck, wird die elektrische Regelung passiv geschaltet.

Sind alle Aufbauventile geschlossen, wird im Schritt 162 die aktuelle Speicherdruckänderung dPSP/dt mit der Solländerung verglichen. Ist der aktuelle Wert kleiner als der (untere) Sollwert, wird im darauffolgenden Schritt 164 überprüft, ob die Änderung des Speicherdrucks kleiner als ein bestimmter Grenzwert, zum Beispiel 0,5 bar/sec., ist. In diesem Fall wird gemäß Schritt 166 ein Fehlerbild festgestellt, nach welchem kein Druckanstieg beim Laden erfolgt. Dies kann beispielsweise daran liegen, daß die Pumpe trotz Ansteuerung nicht läuft, daß eine Leckage im Bereich der Druckversorgung aufgetreten ist, daß sich Luft in der Saugleitung der Pumpe befindet und/oder daß der Speicherdrucksensor defekt ist. Dieser Fehlerzustand wird angezeigt bzw. in einem Speicher abgelegt und gemäß Schritt 168 wegen der fehlerbehafteten Druckversorgung auf einen rein hydraulischen Betrieb der Bremsanlage umgeschaltet. Zu diesem Zweck werden die Trennventile MV_TVR und MV_TVL geöffnet. Auch alle anderen Magnetventile gehen in den stromlosen Zustand über. Ein Bremsdruckaufbau ist dann vom Fahrer über den Hauptzylinder, die geöffneten Trennventile und die Bremsleitung an den Vorderrädern möglich. Die Hinterräder bleiben in diesem Notbremsbetrieb ungebremst.

Hat Schritt 164 ergeben, daß bei einer Änderung unterhalb der vorgegebenen Solländerung die Geschwindigkeit des Speicherdruckaufbaus den im Schritt 164 überprüften Grenzwert überschreitet, wird gemäß Schritt 170 von einem zu geringen Druckanstieg beim Ladevorgang ausgegangen. Ein derartiger, zu geringer Druckanstieg kann in einer verminderten Pumpenleistung durch Unterspannung oder innere Leckage entstehen, durch Luft oder Verstopfung der Saugleitung, durch Leckage nach außen oder über die an sich geschlossenen Aufbauventile, durch einen Drucksensorfehler oder durch einen zu weichen Speicher. Der entsprechende Fehlerzustand wird angezeigt bzw. im Fehlerspeicher abgelegt. Dann wird gemäß Schritt 168 der Notbremsbetrieb eingeleitet.

Wurde im Schritt 162 nicht festgestellt, daß die Speicherdruckänderung kleiner als der vorgegebene Sollwert ist, wird im darauffolgenden Schritt 172 überprüft, ob der Gradient größer als der (obere) Sollwert ist. Ist der Speicherdruckgradient größer als der vorgegebene Sollwert, so wird gemäß Schritt 174 ein zu steiler Druckanstieg beim Laden angenommen. Dieser ergibt sich beispielsweise aus einem zu harten Speicher, wenn dieser verstopft ist oder Gas entwichen ist, oder bei einem Speicherdrucksensorfehler. Der entsprechende Fehlerzustand wird angezeigt bzw. abgespeichert und das Bremssystem gemäß Schritt 168 in den Notbremsbetrieb geschaltet.

Wird als Fehlerzustand ein zu steiler Druckanstieg beim Laden erkannt, kann im ungebremsten Zustand zwischen Speicherdrucksensorfehler und einem zu harten Speicher nicht unterschieden werden. Dies kann erst während der nächsten Bremsungen erreicht werden, wobei bei einem Speicherdrucksensorfehler bei den nächsten Bremsungen der Radistbremsdruck kleiner als der Sollbremsdruck an allen Rädern ist. Dies deshalb, weil nicht genügend Druck aus der Druckversorgung zur Verfügung steht. Durch Überprüfung des Raddruckverlaufs während der nächsten Bremsungen wird in einem Ausführungsbeispiel der Speicherdrucksensorfehler vom zu harten Speicher unterschieden. Dies wird in vorteilhafter Weise auch zu einer Aufspaltung des Notbremsbetriebs ausgenutzt, wobei bei erkanntem Fehlerzustand eines erkannten zu steilen Druckanstiegs zunächst der Fahrer nur gewarnt wird, ohne daß auf die Notfallebene zurückgegangen wird. In diesem Fall wird nur bei vorliegendem Bremswunsch die Pumpe angesteuert. Hat sich nach einigen Bremsungen ergeben, daß ein Speicherdrucksensorfehler vorliegt, wird der Notbremsbetrieb wie anhand von Schritt 168 beschrieben eingeleitet. Statt in den Notbremsbetrieb zu schalten, kann auch in einen Notbremsbetrieb geschaltet werden, bei dem der Speicherdruck über ein geeignetes Hydraulikmodell aus den Verläufen des Raddruckes und der Pumpenansteuerung abgeschätzt wird. Die nötige Bestromung der Einlaßventile für einen Druckaufbau ist ebenfalls abhängig vom Speicherdruck. Damit kann der Speicherdruck innerhalb einer beschränkten Genauigkeit abgeschätzt werden.

Entsprechend ist bei zu geringem Druckanstieg beim Speicherladen (Schritt 170) vorgesehen, daß nicht die gesamte Bremse in den Notbremsbetrieb übergeht, sondern daß lediglich Funktionen abgeschaltet werden, die eine sehr große Dynamik des Druckaufbaus erfordern und daher eine korrekte Druckversorgung benötigen. Derartige Funktionen sind beispielsweise Antiblockierschutz, Antriebsschlupfregelung oder Fahrdynamikregelung. In einem Ausführungsbeispiel werden diese bei einem zu geringen Druckanstieg abgeschaltet, während die Betriebsbremsfunktion weiterhin elektrisch gesteuert wird.

Hat Schritt 172 ergeben, daß der Gradient kleiner als der Sollwert ist, wird im darauffolgenden Schritt 176 der Absolutwert des Speicherdrucks PSP mit einem vorgegebenen minimalen Systemdruck PMIN, z.B. 130 bar, verglichen. Unterschreitet der Speicherdruck diesen Systemdruck, wird von einem Fehler in der Pumpenförderung ausgegangen und gemäß Schritt 168 der Notbremsbetrieb eingeleitet. Andernfalls, wenn der Speicherdruck größer als der minimale Systemdruck ist, arbeitet die Druckversorgung korrekt, so daß der Normalbetrieb gemäß Schritt 160 durchgeführt wird.

Beim Speicherdruckhalten, wenn die Pumpe nicht angesteuert wird, laufen entsprechende Überwachungsmaßnahmen ab. Ist die Pumpe nicht betätigt (vgl. Schritt 156), wird in Schritt 178 überprüft, ob die Aufbauventile MV_Uxx geschlossen sind. Ist dies nicht der Fall, befindet sich das System in einem Betriebszustand mit Volumenentnahme, so daß keine Überprüfung der Druckversorgung stattfindet. Sind die Ventile geschlossen, wird im Schritt 180 der Speicherdruckgradient mit dem Sollgradienten verglichen. Unterschreitet der Speicherdruckgradient den (unteren) Solldruckgradient, der bei Speicherdruckhalten im Bereich von Null liegt, so wird gemäß Schritt 182 als Fehlerzustand ein Druckabfall bei Halten angenommen. Dies kann auf eine interne Leckage im Bereich der Rückschlag- oder Aufbauventile, auf eine externe Leckage oder auf Sensorfehler beruhen. Die Folge ist ein Notbremsbetrieb gemäß Schritt 168.

Ist der Gradient gemäß Schritt 180 nicht kleiner als der Sollgradient, wird im Schritt 184 überprüft, ob er größer als der (obere) Sollgradient ist. In diesem Fall wird gemäß Schritt 168 von einem Druckanstieg ohne Pumpenansteuerung ausgegangen, was infolge eines Drucksensorfehlers oder einer elektrisch fehlerhaft angesteuerten Pumpe vorkommen kann. In diesem Fall wird ebenfalls gemäß Schritt 168 der Notbremsbetrieb eingeleitet. Arbeitet das System normal, d.h. überschreitet der Druckgradient gemäß Schritt 184 nicht den Sollwert, so wird gemäß Schritt 176 der Speicherdruck mit dem minimalen Systemdruckwert verglichen. Bei Unterschreiten des Systemdrucks wird der Notbremsbetrieb, ansonsten der Normalbetrieb durchgeführt.

Die beschriebene Überwachung der Funktion der Hochdruckversorgung der Bremsanlage läuft während dem gesamten Betriebszyklus des Kraftfahrzeugs mit. Dadurch wird eine ständige Überprüfung der Hochdruckversorgung sichergestellt und die Betriebssicherheit des elektrohydraulischen Bremssystems erheblich verbessert. Wurde ein Fehler erkannt, der zu einem rein hydraulischen Notbremsbetrieb führt, wird auf die Überwachung bis zum nächsten Betriebszyklus verzichtet.

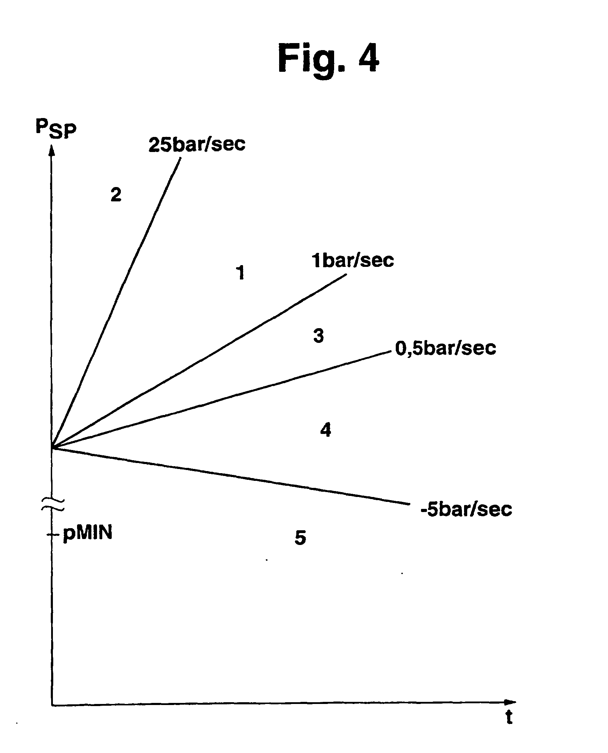

Die Überwachungen auf der Basis der Druckänderung (= Druckgradienten, Änderungsgeschwindigkeit) sind anhand des Zeitdiagramms in Figur 4 verdeutlicht. Dort ist der Speicherdruckwert PSP über der Zeit aufgetragen. Die eingetragenen Geraden repräsentieren Grenzwerte für den Druckgradienten in einem bevorzugten Ausführungsbeispiel. Dabei wird als Sollwert ein Druckgradient zwischen 1 bar/sek. und 25 bar/sek. angenommen. Verläuft der Druckgradient innerhalb dieses Bereiches (1), so wird von einer funktionsfähigen Druckversorgung ausgegangen. Befindet sich der Druckgradient oberhalb des oberen Grenzwertes (Bereich 2) so findet ein zu steiler Druckaufbau statt. Unterhalb des Grenzwertes wird oberhalb eines weiteren Grenzwertes von 0,5 bar/sek (Bereich 3) von einem zu geringen Druckaufbau ausgegangen, während unterhalb dieses Grenzwertes bis zur horizontalen Linie (Bereich 4) von fehlendem Druckaufbau ausgegangen wird. Im Falle des Druckhaltens (keine Pumpenansteuerung) sei ein Sollwert von - 5 bar/sek. vorgegeben. Damit kann ein fehlerhaftes Ansprechen der Überwachung bei Temperaturausgleich im Speicher nach einem Ladevorgang verhindert werden. Dies bedeutet, daß bei Unterschreiten dieses Sollwertes (Bereich 5) von einem unplausiblen Druckabfall beim Halten ausgegangen wird. Oberhalb der horizontalen Linie (0 bar/sek) wird bei Druckhalten von einem Druckaufbau ohne Pumpenansteuerung ausgegangen. Dies ist in Figur 4 nicht eingezeichnet.

## Patentansprüche

1. Verfahren zur Steuerung einer Bremsanlage eines Kraftfahrzeugs, bei welcher Bremsdruck in den Bremsen (16, 18, 20, 22) der Räder auf der Basis eines vorgegebenen Bremswunsches elektrisch durch Betätigen von druckauf- und -abbauenden Ventilanordnungen bereitgestellt wird,
wobei eine Druckversorgung vorgesehen ist, die aus wenigstens
- einem Speicher (44) und
- einer ansteuerbaren Pumpe (42)
besteht,
wobei die Pumpe (42) zum Laden des Speichers (44) in bestimmten Betriebszuständen eingeschaltet ist,
wobei die Funktionsweise der Druckversorgung auf der Basis der Änderung des Speicherdrucks (psp) über der Zeit (t) überwacht wird,
**dadurch gekennzeichnet, dass**
der Fehlerzustand "zu steiler Druckanstieg" erkannt wird, wenn bei eingeschalteter Pumpe (42) die Speicherdruckänderung (dpsp/dt) wenigstens einen vorgegebenen Sollwert (dpsp/dtsoll) überschreitet.

2. Verfahren nach Anspruch 1, **dadurch gekennzeichnet, daß** der Sollwert abhängig ist von der Ansteuersignalgröße der Pumpe.

3. Verfahren nach Anspruch 1 oder 2, **dadurch gekennzeichnet, daß** der Sollwert ein Wertebereich mit einer oben und unteren Grenze ist.

4. Verfahren nach einem der vorhergehenden Ansprüche, **dadurch gekennzeichnet, daß** die Erkennung des Fehlerzustands "zu steiler Druckanstieg" nur dann stattfindet, wenn keine Volumenentnahme aus dem Speicher während eines Bremsvorganges erfolgt.

5. Verfahren nach einem der vorhergehenden Ansprüche, **dadurch gekennzeichnet, daß** der Absolutwert des Speicherdrucks mit einem Grenzwert verglichen wird.

6. Verfahren nach einem der vorhergehenden Ansprüche, **dadurch gekennzeichnet, daß** bei eingeschalteter Pumpe der Fehler "kein Druckanstieg" erkannt wird, wenn die Speicherdruckänderung unterhalb des Sollwertes und unterhalb eines weiteren Grenzwertes liegt, daß der Fehler "zu geringer Druckanstieg" erkannt wird, wenn dieser weitere Grenzwert überschritten wird.

7. Verfahren nach Anspruch 1, **dadurch gekennzeichnet, daß** ein Speicherdrucksensorfehler erkannt wird, wenn bei nachfolgenden Bremsungen an allen Rädern der Istradbremsdruck den vom Fahrer vorgegebenen Sollradbremsdruck nicht erreicht.

8. Verfahren zur Steuerung einer Bremsanlage eines Kraftfahrzeugs nach Anspruch 6,
wobei in der Bremsanlage eine Ventilanordnung vorgesehen ist, welche im Fehlerfall der Druckversorgung einen hydraulischen Durchgriff des Fahrers auf zumindest die Radbremsen einer Achse sicherstellt,
**dadurch gekennzeichnet, dass**
bei dem Fehlerzustand "zu geringer Druckanstieg" lediglich Funktionen abgeschaltet werden, die eine große Dynamik des Druckaufbaus erfordern, während bei dem Fehlerzustand "zu steiler Druckanstieg" zunächst lediglich eine Warnung an den Fahrer ausgegeben wird, wobei bei nachfolgender Erkennung eines Speicherdrucksensorfehlers das elektrische System abgeschaltet und auf hydraulische Steuerung gegangen wird.

9. Verfahren nach einem der vorhergehenden Ansprüche, **dadurch gekennzeichnet, daß** bei ausgeschalteter Pumpe ein Fehlerzustand "Druckabfall bei Halten" erkannt wird, wenn der Druckgradient den Sollwert unterschreitet, während der Fehlerzustand "Druckanstieg ohne Pumpe" erkannt wird, wenn die Druckänderung den Sollwert überschreitet.

10. Vorrichtung zur Steuerung einer Bremsanlage eines Kraftfahrzeugs, mit
- einer elektronischen Steuereinheit (100), die Bremsdruck in den Bremsen (16, 18, 20, 22) der Räder auf der Basis eines vorgegebenen Bremswunsches elektrisch durch Betätigen von druckauf- und -abbauenden Ventilanordnungen einregelt, und
- einer Druckversorgung, die aus wenigstens einem Speicher (44) und einer ansteuerbaren Pumpe (42) besteht,
wobei die Steuereinheit die Pumpe (42) zum Laden des Speichers (44) in bestimmten Betriebszuständen einschaltet, und
wobei die Steuereinheit (100) Fehlererkennungsmittel umfaßt, die die Funktionsweise der Druckversorgung auf der Basis der Änderung des Speicherdrucks (psp) über der Zeit (t) überprüfen,
**dadurch gekennzeichnet, dass**
die Fehlererkennungsmittel den Fehlerzustand "zu steiler Druckanstieg" erkennen, wenn bei eingeschalteter Pumpe die Speicherdruckänderung (dpsp/dt) wenigstens einen vorgegebenen Sollwert (dpsp/dtsoll) überschreitet.

11. Vorrichtung zur Steuerung einer Bremsanlage eines Kraftfahrzeugs nach Anspruch 10, wobei eine Ventilanordnung vorgesehen ist, die von der Steuereinheit im Fehlerfall der Druckversorgung angesteuert wird und die einen hydraulischen Durchgriff des Fahrers auf zumindest eine Achse freigibt,
**dadurch gekennzeichnet, dass**
die Fehlererkennungsmittel bei einem Fehlerzustand "zu geringer Druckanstieg" lediglich Funktionen abschalten, die eine große Dynamik des Druckaufbaus erfordern, während bei einem Fehlerzustand "zu steiler Druckanstieg" zunächst lediglich eine Warnung an den Fahrer ausgegeben wird, wobei bei nachfolgender Erkennung eines Speicherdrucksensorfehlers das elektrische System abgeschaltet und auf hydraulische Steuerung gegangen wird.

## Claims

1. Method for controlling a brake system of a motor vehicle, in which brake pressure is made available electrically in the brakes (16, 18, 20, 22) of the wheels on the basis of a predefined braking request by activating pressure-increasing and pressure-decreasing valve arrangements,
wherein a pressure supply is provided which is composed of at least
- one accumulator (44) and
- an actuable pump (42),
wherein the pump (42) is switched on in certain operating states in order to charge the accumulator (44),
wherein the method of operation of the pressure supply is monitored on the basis of the change in the accumulator pressure (psp) over time (t),
**characterized in that**
the fault state "excessively steep rise in pressure" is detected if the change (dpsp/dt) in accumulator pressure when the pump (42) is switched on exceeds at least one pre-definable setpoint value (dpsp/dtsoll).

2. Method according to Claim 1, **characterized in that** the setpoint value is dependent on the actuation signal value of the pump.

3. Method according to Claim 1 or 2, **characterized in that** the setpoint value is a value range with an upper and lower limit.

4. Method according to one of the preceding claims, **characterized in that** the fault state "excessively steep rise in pressure" is detected only if no volume is extracted from the accumulator during a braking process.

5. Method according to one of the preceding claims, **characterized in that** the absolute value of the accumulator pressure is compared with a limiting value.

6. Method according to one of the preceding claims, **characterized in that** the fault "no rise in pressure" is detected when the pump is switched on if the change in accumulator pressure is below the setpoint value and below a further limiting value, **in that** the fault "excessively low rise in pressure" is detected if this further limiting value is exceeded.

7. Method according to Claim 1, **characterized in that** an accumulator pressure sensor fault is detected if during subsequent braking operations at all the wheels the actual wheel braking pressure does not reach the setpoint wheel braking pressure predefined by the driver.

8. Method for controlling a brake system of a motor vehicle according to Claim 6, wherein a valve arrangement which, in the event of a fault in the pressure supply ensures hydraulic intervention by the driver at at least the wheel brakes of one axle, is provided in the brake system,
**characterized in that**
in the case of the fault state "excessively low rise in pressure" only functions which require a large dynamic of the pressure increase are switched off, while in the case of the fault state "excessively steep rise in pressure" initially only a warning is issued to the driver, in which case, if an accumulator pressure sensor fault is subsequently detected, the electrical system is switched off and the system is switched to hydraulic control.

9. Method according to one of the preceding claims, **characterized in that** when the pump is switched off a fault state "pressure drop when holding pressure" is detected if the pressure gradient drops below the setpoint value, while the fault state "rise in pressure without pump" is detected if the change in pressure exceeds the setpoint value.

10. Device for controlling a brake system of a motor vehicle, having
- an electronic control unit (100) which applies braking pressure electrically to the brakes (16, 18, 20, 22) of the wheels on the basis of a predefined braking request by activating pressure-increasing and pressure-decreasing valve arrangements, and
- a pressure supply which is composed of at least one accumulator (44) and an actuatable pump (42),
wherein the control unit switches on the pump (42) in certain operating states in order to charge the accumulator (44), and
wherein the control unit (100) comprises fault detection means which check the method of operation of the pressure supply on the basis of the change in the accumulator pressure (psp) over time (t),
**characterized in that**
the fault detection means detect the fault state "excessively steep rise in pressure" if the change (dpsp/dt) in accumulator pressure when the pump is switched on exceeds at least one predefined setpoint value (dpsp/dtsoll).

11. Device for controlling a brake system of a motor vehicle according to Claim 10, wherein a valve arrangement is provided which is actuated by the control unit in the event of a fault in the pressure supply and which enables hydraulic intervention by the driver at at least one axle,
**characterized in that**
in the case of a fault state "excessively low rise in pressure" the fault detection means switch off only functions which require a large dynamic of the pressure increase, while in the case of a fault state "excessively steep rise in pressure" initially only a warning is issued to the driver, in which case, if an accumulator pressure sensor fault is subsequently detected, the electrical system is switched off and the system is switched to hydraulic control.

## Revendications

1. Procédé de contrôle d'un système de freinage d'un véhicule automobile,
selon lequel
une pression de freinage est créée électriquement dans les freins (16, 18, 20, 22) des roues sur la base d'un souhait de freinage prédéterminé, par actionnement d'un dispositif de soupapes établissant et relâchant la pression,
il est prévu une source de pression qui se compose d'au moins
- un accumulateur (44) et
- une pompe commandable (42),
la pompe (42) est enclenchée pour le chargement de l'accumulateur (44) dans des circonstances de fonctionnement déterminées,
le mode de fonctionnement de la source de pression est surveillé sur la base de la variation de la pression de l'accumulateur (psp) au cours du temps (t),
**caractérisé en ce que**
la situation de défaut "montée de pression trop brutale" est reconnue lorsqu'avec la pompe (42) enclenchée, la variation de la pression de l'accumulateur (dpsp/dt) dépasse au moins une valeur de consigne prédéterminée (dpsp/dt_{cons}).

2. Procédé selon la revendication 1,
**caractérisé en ce que**
la valeur de consigne dépend de la grandeur du signal de commande de la pompe.

3. Procédé selon la revendication 1 ou 2,
**caractérisé en ce que**
la valeur de consigne est une plage de valeurs avec une limite supérieure et une limite inférieure.

4. Procédé selon l'une quelconque des revendications précédentes,
**caractérisé en ce que**
la reconnaissance de la situation de défaut "montée de pression trop brutale" ne se fait que lorsqu'il ne se produit pas de diminution de volume dans l'accumulateur pendant une opération de freinage.

5. Procédé selon l'une quelconque des revendications précédentes,
**caractérisé en ce que**
la valeur absolue de la pression de l'accumulateur est comparée à une valeur limite.

6. Procédé selon l'une quelconque des revendications précédentes,
**caractérisé en ce que**
avec la pompe enclenchée, le défaut "pas de montée de pression" est reconnu lorsque la variation de la pression de l'accumulateur se situe en dessous de la valeur de consigne et en dessous d'une autre valeur limite, et le défaut "montée de pression trop faible" est reconnu lorsque cette autre valeur limite est dépassée.

7. Procédé selon la revendication 1,
**caractérisé en ce qu'**
un défaut du capteur de pression de l'accumulateur est reconnu lorsque, lors de freinages successifs sur toutes les roues, la pression réelle de freinage des roues n'atteint pas la pression de consigne de freinage des roues prédéterminée par le conducteur.

8. Procédé de contrôle d'un système de freinage d'un véhicule automobile selon la revendication 6, selon lequel il est prévu dans le système de freinage un dispositif de soupapes qui, en cas de défaut de la source de pression, assure une intervention hydraulique du conducteur sur au moins les freins de roue d'un essieu,
**caractérisé en ce que**
lors de la situation de défaut "montée de pression trop faible", seules les fonctions qui nécessitent une dynamique élevée d'établissement de la pression sont déconnectées tandis que, lors de la situation de défaut "montée de pression trop brutale", seul un avertissement est d'abord adressé au conducteur, et en cas de reconnaissance continue d'un défaut du capteur de pression de l'accumulateur, le système électrique est déconnecté et on passe à une commande hydraulique.

9. Procédé selon l'une quelconque des revendications précédentes,
**caractérisé en ce qu'**
avec la pompe déconnectée, une situation de défaut "chute de pression à l'arrêt" est reconnue lorsque le gradient de pression descend en dessous de la valeur de consigne, tandis que la situation de défaut "montée de pression sans pompe" est reconnue lorsque la variation de la pression dépasse la valeur de consigne.

10. Dispositif de contrôle d'un système de freinage d'un véhicule automobile, avec
- une unité de commande électronique (100), qui régule électriquement la pression de freinage dans les freins (16, 18, 20, 22) des roues sur la base d'un souhait de freinage prédéterminé, par actionnement de dispositifs de soupapes établissant et relâchant la pression, et
- une source de pression, qui se compose d'au moins un accumulateur (44) et d'une pompe commandable (42),
l'unité de commande enclenche la pompe (42) pour le chargement de l'accumulateur (44) dans des circonstances de fonctionnement déterminées, et
l'unité de commande (100) comprend des moyens de reconnaissance de défauts, qui contrôlent le mode de fonctionnement de la source de pression sur la base de la variation de la pression de l'accumulateur (psp) au cours du temps (t),
**caractérisé en ce que**
les moyens de reconnaissance de défauts reconnaissent la situation de défaut "montée de pression trop brutale" lorsque, avec la pompe enclenchée, la variation de la pression de l'accumulateur (dpsp/dt) dépasse au moins une valeur de consigne prédéterminée (dpsp/dt_{cons}).

11. Dispositif de contrôle d'un système de freinage d'un véhicule automobile selon la revendication 10, dans lequel est prévu un dispositif de soupapes commandé par l'unité de commande en cas de défaut de la source de pression qui autorise une intervention hydraulique du conducteur sur au moins un essieu,
**caractérisé en ce que**
les moyens de reconnaissance de défauts déconnectent, dans une situation de défaut "montée de pression trop faible", uniquement les fonctions qui nécessitent une dynamique élevée d'établissement de la pression, tandis que, dans une situation de défaut "montée de pression trop brutale", seul un avertissement est d'abord adressé au conducteur, et en cas de reconnaissance continue d'un défaut du capteur de pression de l'accumulateur, le système électrique est déconnecté et on passe à une commande hydraulique.
